# FASCICULE DE BREVET EUROPEEN

(11) **EP 1 118 895 B1**
(45) Date de publication et mention de la délivrance du brevet: **19.04.2006**
(21) Numéro de dépôt: 01400121.8
(22) Date de dépôt: 17.01.2001
(51) Int. Cl.: G02B 23/08

(54) **Dispositif de vision Jour/Nuit**
Tag- und Nachtsichtgerät
Day and night vision device

(30) Priorité: 19.01.2000 FR 0000651
(43) Date de publication de la demande: 25.07.2001
(73) Titulaire: GIAT Industries, 78000 Versailles (FR)
(72) Inventeur: Menager, Jean-Claude, 78700 Port Marly (FR); Peion, Michel, 78450 Villepreux (FR); Hirard, Alain, 78000 Versailles (FR)
(74) Mandataire: Célanie, Christian

(56) Documents cités:
- EP-A- 0 359 634
- EP-A- 0 459 885
- EP-A- 0 463 929
- FR-A- 2 530 009
- FR-A- 2 552 893

## Description

Le domaine technique de la présente invention est celui des dispositifs d'observation sur véhicule ou sur infrastructure fixe.

Dans un véhicule blindé, par exemple, l'utilisateur observe l'extérieur à l'aide d'épiscopes classiques placés de manière convenable sur le pourtour de la tourelle assurant une vision rapprochée limitée à l'environnement immédiat du véhicule. Ces épiscopes sont décrits par exemple dans le brevet EP 0 157 676, ils n'offrent qu'une vision diurne du milieu extérieur. Les exigences tactiques actuelles imposent une vision diurne et nocturne, cette dernière étant de type connu grâce aux systèmes thermique et à intensification de lumière. De plus, en raison de l'encombrement intérieur du véhicule, l'opérateur doit pouvoir accéder à l'une ou l'autre des visions sans se déplacer et ceci dans un temps minimum.

Le brevet EP-A-0 459 885 décrit un épiscope délimitant deux voies : une voie jour et une voie nuit. La voie nuit est constituée d'un prisme supérieur et d'un tube intensificateur. Il en résulte une structure particulière dans laquelle les deux voies jour et nuit passent par le même prisme puisque le tube intensifie la lumière reçue par le prisme.

La présente invention vise à remédier à ces inconvénients en proposant un dispositif de vision jour/nuit intégrant un temps d'accès très bref et ceci sans déplacement de l'opérateur.

L'invention a donc pour objet un dispositif de vision jour/nuit selon la revendication 1.

La caméra est orientée vers un champ d'observation correspondant sensiblement au champ d'observation couvert par l' épiscope.

Le plan délimité par l'écran du moniteur est sensiblement perpendiculaire au plan délimité par la fenêtre d'entrée de l'épiscope.

La partie extérieure de l'épiscope comprend un premier bloc optique monté dans un bâti solidaire du véhicule, la partie intérieure quant à elle comprenant un second bloc optique monté sur une platine, ces deux parties constituant chacune un élément unitaire compact.

Les deux blocs optiques sont séparés par une lame d'air et sont alignés pour assurer une continuité des chemins optiques du champ d'observation.

Le dispositif de vision jour/nuit comporte un mécanisme de rotation, constitué par exemple d'un roulement à bille, qui relie la platine au bâti.

Un mécanisme de verrouillage de la platine permet l'indexage de la vision diurne ou nocturne.

Les mécanismes de rotation et de verrouillage peuvent être commandés manuellement ou automatiquement.

La caméra est du type vidéo, thermique ou à intensification de lumière.

L'étanchéité entre le milieu intérieur et le milieu extérieur est assurée par un joint de compression disposé entre le bâti et le véhicule.

La lame d'air est isolée du milieu intérieur par un joint de compression disposé entre le bâti et la platine.

Le dispositif de vision jour/nuit comprend des options du type symbologie sur écran, réglage moniteur, dégivrage, désembuage et filtre de protection laser.

Ce dispositif de vision jour/nuit constitue un module unitaire compact à installer de manière fixe ou mobile sur un véhicule.

Avantageusement, ce dispositif comporte une hauteur de champ d'observation modifiable par remplacement de la partie extérieure.

Un tout premier avantage de la présente invention réside dans le fait qu'elle offre une vision de jour et de nuit, l'opérateur n'ayant pas besoin de changer de position lors du passage d'une voie à l'autre, ce qui permet de préserver l'ergonomie du poste de travail.

Un autre avantage réside dans la rapidité de passage d'une voie à l'autre tout en préservant l'étanchéité de l'habitacle par rapport à un environnement extérieur vicié.

Un autre avantage réside dans la compacité du dispositif pour offrir une intégration la plus large sur différents matériels.

Un autre avantage réside dans la possibilité d'amener plusieurs voies nocturnes sur un même moniteur, offrant ainsi plusieurs champs extérieurs d'observation.

Un autre avantage de l'invention réside dans l'abaissement des coûts de maintenance d'un tel dispositif, en effet la conception de l'épiscope permet un remplacement partiel des pièces endommagées, en particulier la partie extérieure qui est soumise aux agressions de l'environnement.

Dans un même ordre d'idée, la modularité de l'épiscope permet une modification de la hauteur du champ d'observation par l'utilisation de parties extérieures de différentes hauteurs.

Un autre avantage réside dans une maintenance aisée du moniteur permettant ainsi de ne pas rompre l'étanchéité lors du démontage de ce dernier.

D'autres caractéristiques et avantages de l'invention apparaîtront plus clairement à la lecture du complément de description qui va suivre d'un mode de réalisation donné à titre d'exemple en relation avec les dessins sur lesquels :
- la figure 1 est une vue en coupe d'un poste d'observation équipé du dispositif de vision selon l'invention en position jour,
- la figure 2 est une vue en coupe d'un poste d'observation équipé du dispositif de vision selon l'invention en position nuit,
- la figure 3 est une vue de dessus en coupe selon l'axe XX' d'un poste d'observation équipé du dispositif de vision selon l'invention en position jour,
- la figure 4 est une vue de dessus en coupe selon l'axe XX' d'un poste d'observation équipé du dispositif de vision selon l'invention en position nuit.

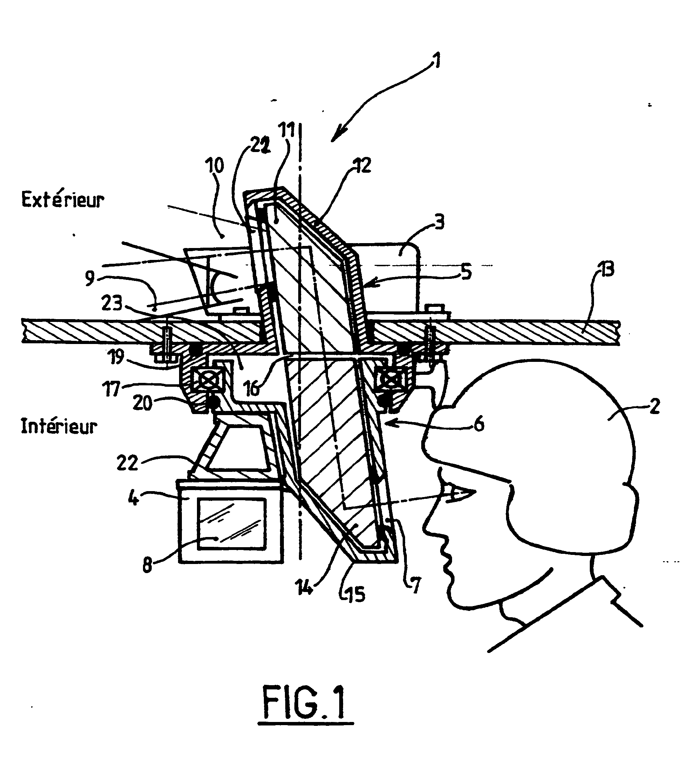

On a représenté une vue partielle d'un poste d'observation sur la figure 1, par exemple dans une tourelle de char, où l'on voit de manière classique le milieu extérieur et le milieu intérieur dans lequel est disposé un opérateur 2. Le dispositif de vision jour/nuit 1 selon l'invention est constitué d'une partie extérieure 5 disposée en saillie de la tourelle 13 et reliée solidairement à celle-ci. Cette partie extérieure 5 est constituée d'un premier bloc optique 11 monté dans un bâti 12 et de manière connue d'une ouverture 21 dirigée vers un champ d'observation 10. Une partie intérieure 6 de l'épiscope est mobile en rotation par rapport à la partie extérieure 5, ceci grâce à un mécanisme de rotation 17. Cette partie intérieure 6 est constituée d'un second bloc optique 14 monté sur une platine 15, cette dernière disposant de manière connue d'une fenêtre d'entrée 7 dirigée vers l'opérateur 2. Les deux blocs optiques 11 et 14 sont sensiblement alignés et sont séparés par une lame d'air 16 d'une épaisseur nécessaire et suffisante à la rotation de l'un par rapport à l'autre et à l'insertion éventuelle de filtres optiques (non représenté). Le mécanisme de rotation 17 est constitué, à titre illustratif, d'un roulement monté dans une cage ou par un montage à glissière (non représenté). Un moniteur 4 est relié à la platine 15 par l'intermédiaire, par exemple, d'un support 22, le plan délimité par l'écran 8 du moniteur 4 étant sensiblement perpendiculaire au plan délimité par la fenêtre d'entrée 7. Dans un autre mode de réalisation non représenté, le moniteur 4 peut être remplacé par un mini-moniteur, équipé d'une loupe, appelé « visu ». Le plan délimité par l'écran de la loupe est alors sensiblement perpendiculaire au plan délimité par la fenêtre d'entrée 7. Une caméra 3 est montée en extérieur solidaire de la tourelle 13, son champ d'observation correspondant sensiblement au champ d'observation 10. Dans un autre mode réalisation de l'invention non représenté, la ou les caméras peuvent être dirigées vers plusieurs champs d'observation. Un premier joint de compression 19 est disposé entre le bâti 12 et la tourelle 13, un second joint 20 est placé entre le bâti 12 et la platine 15, délimitant ainsi un volume intérieur 23 dans lequel s'inscrit la lame d'air 16.

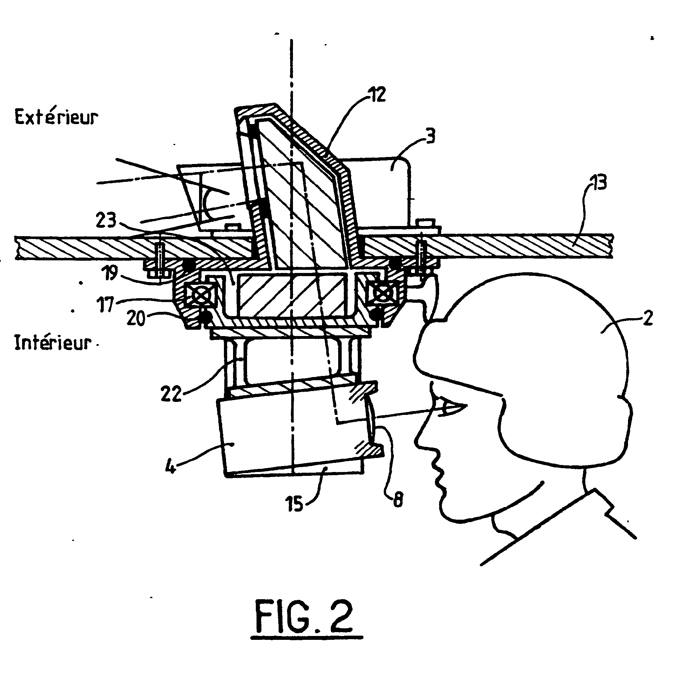

Sur la figure 2, on a représenté une vue partielle du poste d'observation après rotation de la platine 15. L'opérateur 2 est face à l'écran 8 du moniteur 4. La liaison entre la caméra 3 et le moniteur 4 est réalisée par des moyens classiques (non représenté).

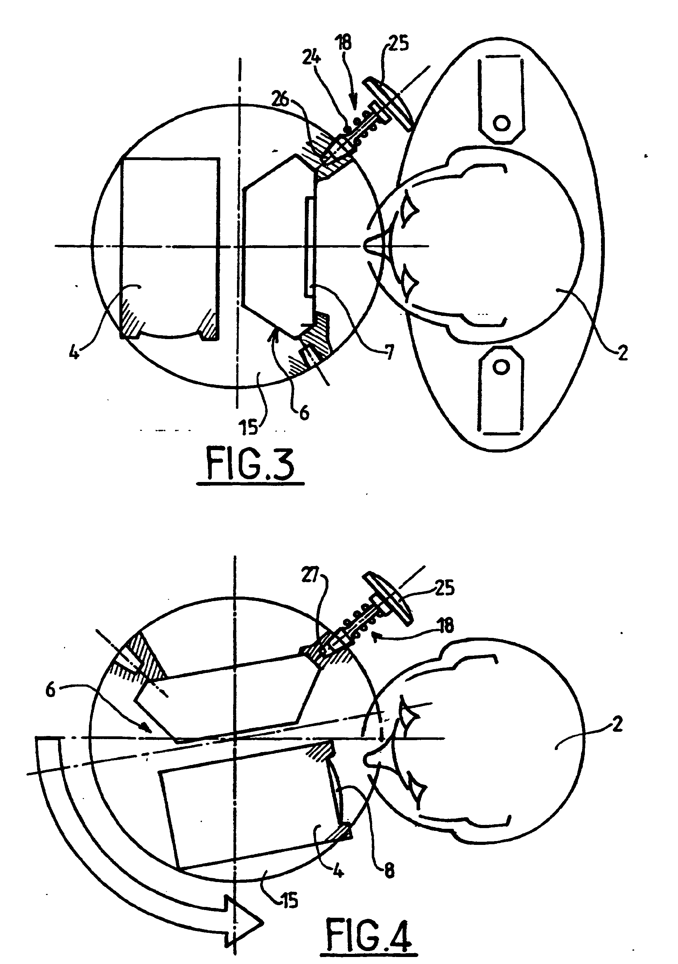

Sur la figure 3, on a représenté une vue de dessus en coupe du poste intérieur d'observation en position jour, sur laquelle est représentée la partie intérieure 6 constituée de la platine 15 et du moniteur 4, la fenêtre d'entrée 7 étant dirigée vers l'opérateur 2. La platine 15 est bloquée en rotation par un mécanisme de verrouillage 18 comprenant par exemple, un ressort 24 et un loquet 25 indexé dans un logement 26 correspondant à la vision jour.

Sur la figure 4, on a représenté une vue de dessus en coupe du poste intérieur d'observation en position nuit, sur laquelle est représentée la partie intérieure 6 constituée de la platine 15 et du moniteur 4, l'écran 8 de ce dernier étant dirigé vers l'opérateur 2. La platine 15 est bloquée en rotation par le mécanisme de verrouillage 18, le loquet 25 étant indexé dans un logement 27 correspondant à la vision nuit.

Le fonctionnement est le suivant.

En vision jour, l'opérateur 2 est placé face à la fenêtre d'entrée 7 de la platine 15, cette dernière étant bloquée en rotation par le loquet 25 du mécanisme de verrouillage 18 indexé dans le logement 26. L'observation extérieure est retransmise à l'opérateur 2 par l'intermédiaire des deux blocs optiques 11 et 14, l'épaisseur de la lame d'air séparant ces deux blocs étant faible pour réduire au minimum les phénomènes de réfraction des rayons cheminant dans l'air mais nécessaire à la rotation vers la position nuit. Le passage à la position nocturne est le suivant. L'opérateur 2 actionne le loquet 25 du mécanisme de verrouillage 18, comprimant ainsi le ressort 24, pour libérer la rotation de la platine 15 par rapport au bâti 12. Cette rotation peut être exécutée manuellement ou automatiquement (non représenté) jusqu'au logement 27 dans lequel vient s'indexer le loquet 25 du mécanisme de verrouillage 18. L'écran 8 du moniteur 4 se trouve alors sensiblement face à l'opérateur 2 qui peut poursuivre son observation par le biais de la caméra 3 disposée en extérieur. Le temps de passage de la vision jour à la vision nuit et vice et versa est très rapide. Le joint de compression 19 assure l'étanchéité entre le milieu intérieur et le milieu extérieur évitant ainsi l'introduction d'eau, de boue, de sable et d'agents nucléaires, bactériologiques ou chimiques. Le joint 20 permet d'obtenir une surpression dans le volume intérieur 23, à l'aide d'un gaz comme l'azote par exemple, pour interdire l'intrusion d'agents polluants et éviter les phénomènes de condensation entre les deux blocs optiques 11 et 14.

## Revendications

1. Dispositif de vision jour/nuit (1) destiné à équiper un véhicule ou une infrastructure militaire permettant à un opérateur (2), placé dans un milieu intérieur, d'observer le milieu extérieur tant de jour que de nuit, du type comportant un épiscope et un ensemble constitué d'une caméra, (3) et d'un moniteur (4), l'épiscope étant constitué de deux parties distinctes, une partie extérieure (5) fixée au véhicule (13) et une partie intérieure (6) mobile en rotation par rapport à cette dernière recevant le moniteur (4), le dispositif (1) assurant ainsi la vision diurne par l'intermédiaire d'une fenêtre d'entrée (7) de l'épiscope et la vision nocturne par l'écran (8) du moniteur (4) sans changement de position de l'opérateur (2).

2. Dispositif de vision jour/nuit (1) selon la revendication 1, **caractérisé en ce que** la caméra (3) est orientée vers un champ d'observation (9) correspondant sensiblement au champ d'observation (10) couvert par l'épiscope.

3. Dispositif de vision jour/nuit (1) selon la revendication 2, **caractérisé en ce que** le plan délimité par l'écran (8) du moniteur (4) est sensiblement perpendiculaire au plan délimité par la fenêtre d'entrée (7) de l'épiscope.

4. Dispositif de vision jour/nuit (1) selon la revendication 3, **caractérisé en ce que** la partie extérieure (5) de l'épiscope comprend un premier bloc optique (11) monté dans un bâti (12) solidaire du véhicule (13), la partie intérieure (6) quant à elle comprenant un second bloc optique (14) monté sur une platine (15), ces deux parties constituant chacune un élément unitaire compact.

5. Dispositif de vision jour/nuit (1) selon la revendication 4, **caractérisé en ce que** les deux blocs optiques (11, 14) sont séparés par une lame d'air (16) et sont alignés pour assurer une continuité des chemins optiques du champ d'observation (10).

6. Dispositif de vision jour/nuit (1) selon la revendication 4, **caractérisé en ce qu'**il comporte un mécanisme de rotation (17), constitué par exemple d'un roulement à bille, qui relie la platine (15) au bâti (12).

7. Dispositif de vision jour/nuit (1) selon la revendication 6, **caractérisé en ce qu'**un mécanisme de verrouillage (18) de la platine (15) permet l'indexage de la vision diurne ou nocturne.

8. Dispositif de vision jour/nuit (1) selon la revendication 7, **caractérisé en ce que** les mécanismes de rotation (17) et de verrouillage (18) peuvent être commandés manuellement ou automatiquement.

9. Dispositif de vision jour/nuit (1) selon la revendication 1, **caractérisé en ce que** la caméra (3) est du type vidéo, thermique ou à intensification de lumière.

10. Dispositif de vision jour/nuit (1) selon l'une quelconque des revendications 4 à 9, **caractérisé en ce que** l'étanchéité entre le milieu intérieur et le milieu extérieur est assurée par un joint de compression (19) disposé entre le bâti (12) et le véhicule (13).

11. Dispositif de vision jour/nuit (1) selon la revendication 5, **caractérisé en ce que** la lame d'air (16) est isolée du milieu intérieur par un joint de compression (20) disposé entre le bâti (12) et la platine (15).

12. Dispositif de vision jour/nuit (1) selon l'une quelconque des revendications précédentes, **caractérisé en ce qu'**il comprend des options du type symbologie sur écran, réglage moniteur, dégivrage, désembuage et filtre de protection laser.

13. Dispositif de vision jour/nuit (1) selon l'une quelconque des revendications précédentes, **caractérisé en ce qu'**il constitue un module unitaire compact à installer de manière fixe ou mobile sur un véhicule.

14. Dispositif de vision jour/nuit (1) selon l'une quelconque des revendications précédentes, **caractérisé en ce qu'**il comporte une hauteur de champ d'observation (10) modifiable par remplacement de la partie extérieure (5).

## Patentansprüche

1. Tag- und Nachtsichtgerät (1) zum Ausstatten eines Fahrzeugs oder einer militärischen Infrastruktur, mit dem ein in einem Innenraum befindlicher Benutzer (2) den Außenraum sowohl bei Tag als auch bei Nacht beobachten kann, vom Typ mit einem Episkop und einer Einheit bestehend aus einer Kamera (3) und einem Monitor (4), wobei das Episkop aus zwei verschiedenen Teilen besteht, nämlich aus einem am Fahrzeug (13) befestigten Außenteil (5) und einem bezüglich des letztgenannten drehbaren Innenteil (6), das den Monitor (4) aufnimmt, wobei das Gerät (1) das Sehen bei Tag über ein Eintrittsfenster (7) des Episkops und das Sehen bei Nacht über den Bildschirm (8) des Monitors (4) ohne Stellungswechsel des Benutzers (2) gewährleistet.

2. Tag- und Nachtsichtgerät (1) nach Anspruch 1, **dadurch gekennzeichnet, dass** die Kamera (3) zum Beobachtungsfeld (9) gerichtet ist, das im wesentlichen dem durch das Episkop abgedeckten Beobachtungsfeld (10) entspricht.

3. Tag- und Nachtsichtgerät (1) nach Anspruch 2, **dadurch gekennzeichnet, dass** die von dem Bildschirm (8) des Monitors (4) begrenzte Ebene im wesentlichen senkrecht zur Ebene verläuft, die vom Eintrittsfenster (7) des Episkops begrenzt wird.

4. Tag- und Nachtsichtgerät (1) nach Anspruch 3, **dadurch gekennzeichnet, dass** das Außenteil (5) des Episkops einen ersten optischen Block (11) enthält, der in einem fest mit dem Fahrzeug (13) verbundenen Gestell (12) montiert ist, wobei das Innenteil (6) seinerseits einen zweiten optischen Block (14) enthält, der an einer Platte (15) montiert ist, wobei diese beiden Teile jeweils ein kompaktes Einheitselement bilden.

5. Tag- und Nachtsichtgerät (1) nach Anspruch 4, **dadurch gekennzeichnet, dass** die beiden optischen Blöcke (11, 14) durch einen Luftspalt (16) getrennt sind und miteinander fluchten, um eine Kontinuität der Lichtwege des Beobachtungsfelds (10) zu gewährleisten.

6. Tag- und Nachtsichtgerät (1) nach Anspruch 4, **dadurch gekennzeichnet, dass** es einen Drehmechanismus (17) enthält, der beispielsweise aus einem Kugellager besteht, das die Platte (15) mit dem Gestell (12) verbindet.

7. Tag- und Nachtsichtgerät (1) nach Anspruch 6, **dadurch gekennzeichnet, dass** ein Mechanismus (18) zum Verriegeln der Platte (15) die Indexierung der Tag- bzw. Nachtsicht ermöglicht.

8. Tag- und Nachtsichtgerät (1) nach Anspruch 7, **dadurch gekennzeichnet, dass** der Drehmechanismus (17) und der Verriegelungsmechanismus (18) manuell oder automatisch steuerbar sind.

9. Tag- und Nachtsichtgerät (1) nach Anspruch 1, **dadurch gekennzeichnet, dass** die Kamera (3) vom Typ Video-, Wärmebild- oder Lichtintensivierungskamera ist.

10. Tag- und Nachtsichtgerät (1) nach einem der Ansprüche 4 bis 9, **dadurch gekennzeichnet, dass** die Dichtheit zwischen Innenraum und Außenraum über eine Quetschdichtung (19) gewährleistet wird, die zwischen Gestell (12) und Fahrzeug (13) angeordnet ist.

11. Tag- und Nachtsichtgerät (1) nach Anspruch 5, **dadurch gekennzeichnet, dass** der Luftspalt (16) über eine Quetschdichtung (20) vom Innenraum getrennt ist, die zwischen Gestell (12) und Platte (15) angeordnet ist.

12. Tag- und Nachtsichtgerät (1) nach einem der vorangehenden Ansprüche, **dadurch gekennzeichnet, dass** es Zusatzausstattungen vom Typ Bildschirmsymbole, Monitoreinstellung, Enteisung, Entnebelung und Laserschutzfilter enthält.

13. Tag- und Nachtsichtgerät (1) nach einem der vorangehenden Ansprüche, **dadurch gekennzeichnet, dass** es ein kompaktes Einheitsmodul bildet, das am Fahrzeug fest oder beweglich zu montieren ist.

14. Tag- und Nachtsichtgerät (1) nach einem der vorangehenden Ansprüche, **dadurch gekennzeichnet, dass** das Beobachtungsfeld (10) durch Austausch des Außenteils (5) in der Höhe verstellbar ist.

## Claims

1. A day/night vision device (1) intended to equip a military vehicle or infrastructure enabling an operator (2), positioned in an interior environment, to observe the exterior environment both in day and night time, of the type incorporating sights and an assembly constituted by a camera (3) and monitor (4), wherein the sights are constituted by two separate parts, an external part (5) attached to the vehicle (13) and an internal part (6) able to rotate with respect to the vehicle and receiving the monitor (4), the device (1) thereby ensuring day vision by means of an inlet window (7) in the sights and night vision by the screen (8) of the monitor (4) without the operator (2) having to change position.

2. A day/night vision device (1) according to Claim 1, wherein the camera (3) is oriented towards a field of observation (9) substantially corresponding to the field of observation (10) covered by the sights.

3. A day/night vision device (1) according to Claim 2, wherein the plane delimited by the screen (8) of the monitor (4) is substantially perpendicular to the plane delimited by the inlet window (7) of the sights.

4. A day/night vision device (1) according to Claim 3, wherein the external part (5) of the sights comprise a first optical unit (11) mounted in a frame (12) integral with the vehicle (13), the internal part (5) comprising a second optical unit (14) mounted on a top plate (15), these two parts each constituting a compact unitary element.

5. A day/night vision device (1) according to Claim 4, wherein the two optical units (11, 14) are separated by an air knife (16) and are aligned to ensure the continuity of the optical channels of the field of observation (10).

6. A day/night vision device (1) according to Claim 4, wherein it incorporates a rotation mechanism (17), constituted, for example, by a ball bearing, which connects the plate (15) to the frame (12).

7. A day/night vision device (1) according to Claim 6, wherein a locking mechanism (18) for the plate (15) enables the day or night vision to be indexed.

8. A day/night vision device (1) according to Claim 7, wherein the rotation (17) and locking (18) mechanisms may be controlled manually or automatically.

9. A day/night vision device (1) according to Claim 1, wherein the camera (3) is of the video, thermal or light intensifying type.

10. A day/night vision device (1) according to any one of Claims 4 to 9, wherein the interior environment is made impervious to the exterior environment by a compression seal (19) positioned between the frame (12) and the vehicle (13).

11. A day/night vision device (1) according to Claim 5, wherein the air knife (16) is insulated from the interior environment by a compression seal (20) positioned between the frame (12) and the plate (15).

12. A day/night vision device (1) according to any one of the above Claims, wherein it comprises options such as screen symbology, monitor adjustment, de-icing, defogging and laser protection filter.

13. A day/night vision device (1) according to any one of the above Claims, wherein it constitutes a compact unitary module to be installed permanently or removably onto a vehicle.

14. A day/night vision device (1) according to any one of the above Claims, wherein it incorporates an observation field height (10) able to be modified by replacement of the external part (5).
